# FASCICULE DE BREVET EUROPEEN

(11) **EP 0 635 144 B1**
(45) Date de publication et mention de la délivrance du brevet: **28.05.1997**
(21) Numéro de dépôt: 93909011.4
(22) Date de dépôt: 08.04.1993
(51) Int. Cl.: G02F 1/155

(54) **DISPOSITIFS ELECTROCHROMIQUES POUR LA MODULATION DE LA LUMIERE, NOTAMMENT DE TYPE ECRANS ET AFFICHEURS**
ELEKTROCHROME VORRICHTUNG ZUR LICHTMODULATION INSBESONDERE FÜR SCHIRM UND ANZEIGE
ELECTROCHROMIC LIGHT MODULATION DEVICES, IN PARTICULAR SCREENS AND DISPLAYS

(30) Priorité: 10.04.1992 FR 9204445
(43) Date de publication de la demande: 25.01.1995
(73) Titulaire: COMPAGNIE GENERALE D'INNOVATION ET DE DEVELOPPEMENT COGIDEV, 92500 Rueil-Malmaison (FR)
(72) Inventeur: GIRAUD, André, F-92300 Levallois-Perret (FR)
(74) Mandataire: Chaillot, Geneviève
(86) Numéro de dépôt international: FR9300358
(87) Numéro de publication internationale: WO9321558

(56) Documents cités:
- EP-A- 0 400 797
- FR-A- 2 274 123
- FR-A- 2 446 532
- GB-A- 2 034 526
- US-A- 4 874 229
- PATENT ABSTRACTS OF JAPAN vol. 9, no. 44 (P-337)(1767) 23 février 1985; & JP-A-59 184 328
- PATENT ABSTRACTS OF JAPAN vol. 15, no. 399 (P-1261) 9 Octobre 1991; & JP-A-03 158 831

## Description

La présente invention concerne les dispositifs électrochromiques pour la modulation de la lumière, notamment les dispositifs pour la réflexion variable de la lumière, pour la transmission variable de la lumière, l'affichage de signaux et images, par exemple, d'informations alphanumériques ou graphiques. A titre d'exemple de ces dispositifs, on cite les panneaux et écrans d'affichage des dimensions et formes les plus diverses, les fenêtres, vitrines, écrans, pare-brise, lunettes à transparence variable, les miroirs à réflexion variable, etc.

De nombreux procédés électrochromiques ont été proposés et décrits pour moduler la lumière en transmission ou en réflexion, afin d'afficher des signaux et images et réaliser ainsi des afficheurs, des écrans, des miroirs ou d'autres objets, qui, en totalité ou en partie, réfléchissent ou transmettent la lumière selon des instructions qui leur sont transmises par voie électrique.

Ces procédés électrochromiques fonctionnent selon les lois de l'électrolyse réversible et utilisent le changement réversible de couleur et/ou de densité optique obtenu par oxydo-réduction électrochimique d'un matériau dit "électrochrome", dont la forme oxydée et la forme réduite sont de couleurs et/ou de densités optiques différentes.

Fondamentalement, une cellule élémentaire de modulation de la lumière, fonctionnant selon un procédé électrochromique, comporte deux électrodes séparées par un milieu électrolytique à une ou plusieurs couches. L'une des électrodes au moins (cas du fonctionnement en réflexion) doit être transparente, étant constituée par un substrat transparent, recouvert d'une couche conductrice, suffisamment transparente.

A ces trois éléments de base, s'ajoutent les différents dispositifs, bien connus de l'homme du métier, destinés à protéger les électrodes, transmettre le courant, protéger la (ou les) couche(s) d'électrolyte, assurer la forme géométrique de la cellule, etc. Le brevet français FR-B-2 618 567 décrit un tel dispositif pour la modulation de la lumière.

Les procédés électrochromiques de modulation de la lumière présentent un ensemble de caractéristiques qui peuvent être avantageuses pour certaines applications, et qui ont été souvent citées, notamment les suivantes :
- possibilité de mémoire en circuit ouvert ;
- faible tension de commande ;
- tolérance assez grande dans la distance entre électrodes ;
- consommation d'énergie limitée aux changements d'état du milieu électrolytique et pouvant être réduite de ce fait pour certains usages.
S'agissant des applications à l'affichage, il est possible, pour certains de ces procédés, d'obtenir un excellent contraste, même en vision latérale, sous un angle élevé. A la différence de certains procédés qui fonctionnent par transmission en lumière polarisée, et dont la visibilité est mauvaise à la lumière du jour, celle-ci convient très bien pour les afficheurs électrochromiques fonctionnant par réflexion, même lorsqu'ils sont placés a l'extérieur avec un fort ensoleillement.

Cependant, l'obtention pratique de ces avantages est subordonnée à la résolution de certaines difficultés de mise en oeuvre que les différents procédés proposés se sont attachés à réduire.

Ainsi, par exemple, la nécessité d'éviter l'altération, voire la disparition au milieu électrolytique, se traduisant par la dégradation et la durée de vie insuffisante de la cellule, est à l'origine d'un grand nombre de propositions concernant le choix de la (ou des) couche(s) d'électrolyte, ainsi que la réalisation pratique de cellules rigoureusement étanches. D'autres problèmes tiennent à la difficulté pratique d'installer les composants du milieu électrolytique. Par exemple, il est très difficile, sinon impossible, de réaliser, avec un électrolyte liquide, des cellules électrochromes de très petites dimensions, ou, au contraire, de très grandes dimensions (par suite de la différence de pression hydrostatique entre le haut et le bas de la cellule). Pour d'autres procédés, la difficulté vient du coût de réalisation de la (ou des) couche(s) d'électrolyte, qui exige des procédés coûteux de mise en place, par exemple par dépôt sous vide. Dans d'autres cas, ce sont les propriétés électriques de la cellule qui limitent ses utilisations possibles : par exemple, si la cellule ne possède pas de seuil de tension d'écriture, elle ne se prête pas à la constitution d'un ensemble permettant l'écriture matricielle multiplexée.

Les qualités propres, rappelées ci-dessus des procédés électrochromiques, conduisent naturellement à souhaiter réaliser des écrans ou afficheurs composés de petites cellules (ou pixels), en grand nombre, commandées selon un mode matriciel ("lignes" et "colonnes") multiplexé. Il convient pour cela de choisir un procédé présentant par lui-même notamment les qualités convenables par rapport aux différentes difficultés rappelées ci-dessus (seuil d'écriture, durabilité du système électrolytique, durée de vie de la cellule, rapidité suffisante de la réaction, etc.). Toutefois, la réalisation de l'écran ou de l'afficheur se heurte encore à la nécessité de réaliser des électrodes de finesse suffisante en fines lignes et bien isolées de leurs voisines. Pour atteindre un tel objectif, on procède à l'heure actuelle de la façon suivante, notamment dans le cas des écrans ou afficheurs à petits pixels obtenus à partir de "colonnes" transparentes et de "lignes" sur fond non transparent :

L'électrode transparente est créée à partir d'une couche conductrice transparente déposée elle-même sur un substrat transparent, tel que le verre ou une matière plastique transparente. Cette couche conductrice transparente est composée d'un ou plusieurs métaux ou oxydes, tels que, par exemple, l'or, l'argent, l'oxyde d'étain (TO), l'oxyde mixte d'étain et d'indium (ITO), l'oxyde de zinc et le stannate de cadmium, etc., mentionnés dans la littérature. Afin de rester transparentes, ces couches doivent être très minces (quelques centaines à quelques milliers d'Angström). On utilise alors économiquement, pour les déposer, divers procédés bien connus, tels que la pulvérisation de poudres ou de liquides qui se décomposent sur le substrat chaud, le dépôt en phase gazeuse par procédé chimique (CVD), les dépôts sous vide, ou même les précipitations chimiques. Toutefois, la faible épaisseur requise ne permet pas d'obtenir une grande conductivité de la couche, celle-ci étant, pour un métal ou un oxyde donné et pour un procédé de dépôt donné, proportionnelle à l'épaisseur. C'est un compromis entre transparence et épaisseur qui doit être choisi.

Par ailleurs, on réalise ces électrodes transparentes sous forme de fines lignes isolées les unes des autres (qui formeront les "colonnes" de l'écran ou de l'afficheur), soit en déposant une couche transparente conductrice continue sur toute la surface du substrat transparent, puis en la "gravant" par des procédés couramment employés dans la photolithographie, soit en recouvrant d'un masque approprié la surface du substrat transparent et en déposant ensuite le métal ou l'oxyde conducteur, le dépôt s'effectuant seulement aux emplacements des colonnes laissés accessibles par le masque, lequel est ensuite enlevé.

On parvient donc, grâce aux techniques connues, à réaliser des électrodes transparentes de la finesse désirée, mais un problème subsiste lorsque l'écran doit atteindre de grandes dimensions et lorsque le procédé électrochromique impose une faible chute ohmique et un courant relativement élevé. La résistance de la colonne qui transmet la commande est alors trop élevée, et il ne suffit pas d'amener le courant aux deux extrémités de la colonne. Il convient de créer des amenées de courant supplémentaires à l'électrode transparente entre les deux extrémités de la colonne, c'est-à-dire à l'intérieur même de l'écran. On peut mentionner au passage que ce problème se pose aussi pour les écrans ou afficheurs à petits pixels transparents, c'est-à-dire dans lesquels les "lignes" sont obtenues de la même façon que les colonnes, auquel cas on peut également avoir à amener du courant supplémentaire aux lignes de grande dimension. Un problème analogue se pose pour les afficheurs, ou plus généralement, pour les modulateurs de lumière non transparents, voire transparents, qui comportent des pixels de grande dimension, dont la forme correspond par exemple à celle de lettres dans le cas d'afficheurs non transparents, voire à celle du modulateur lui-même, par exemple, dans le cas des vitres à obscurcissement électrocommandé, l'objectif étant alors de répartir le courant au sein du pixel de grande dimension.

Différentes solutions ont été proposées pour résoudre les problèmes qui viennent d'être évoqués, mais elles sont toutes malcommodes.

Certaines consistent à constituer une "contre-colonne" très conductrice au dos de l'écran et à faire communiquer en certains points par des sortes de "clous" ou "rivets" la contre-colonne avec la colonne d'ITO par exemple, en traversant le film qui supporte les "lignes", puis à travers la (ou les) couche(s) d'électrolyte. Cette opération est délicate et coûteuse, car le "clou", de très faible dimension, doit être placé avec une grande précision. Or, il peut y en avoir plusieurs par colonne, et il peut y avoir plusieurs centaines de colonnes.

Le "clou" doit être isolé dans la partie qui traverse la (ou les) couche(s) d'électrolyte. En outre, il doit être cependant en contact avec la couche transparente conductrice, fait dans une matière conductrice non corrodable (ou bien protégé de la corrosion aussi au point de contact). Il doit enfin être en contact avec la contre-colonne, ce qui nécessite des opérations de soudure ou de collage précises et délicates.

Une autre solution consiste à fixer, le long de la colonne, un fil très fin pour qu'il soit pratiquement invisible, conducteur pour amener le courant, en contact avec la couche conductrice, et non corrodable ou protégé de la corrosion. On sait en effet que la visibilité d'une ligne est quasiment nulle si elle est vue sous un angle qui va de quelques dizaines de secondes à une minute d'arc. Ce fil très fin doit être placé avec une grande précision du haut en bas de la colonne.

Dans ces écrans ou afficheurs à petits pixels, la réalisation des électrodes non transparentes (également désignées dans la présente description par le terme "contre-électrodes") est en principe plus simple, puisqu'elle n'a pas à respecter une limite d'épaisseur commandée par la transparence. Lorsqu'il s'agit de réaliser de grands pixels, on a proposé, dans la technique antérieure, d'utiliser des matériaux de contre-électrodes se présentant sous forme de feuilles et de couches de faible épaisseur.

Cependant, les procédés électrochromes les plus intéressants utilisent des matériaux électrolytiques plus ou moins corrosifs, parfois très corrosifs, et le choix du matériau utilisé pour fabriquer la contre-électrode n'est pas indifférent. Il doit à la fois conduire le courant et ne pas être corrodable par l'électrolyte au repos ou en service. On a donc proposé à cet effet, des feuilles souples de graphite pyrolytique, une matière plastique chargée de particules de carbone ou de métal, certaines pâtes conductrices pour sérigraphie, des tissus ou toiles de graphite ou de carbone.

Lorsque l'on veut réaliser un écran à nombreux pixels très petits, il faut réaliser les contre-électrodes qui formeront les "lignes" de l'écran sous forme de fines bandes isolées les unes des autres. On a proposé pour cela de découper une feuille conductrice du type mentionné au précédent paragraphe en fines bandes qu'il faut alors coller les unes à côté des autres sur un support approprié, séparées par un étroit intervalle. Si la feuille est faite, par exemple, de métal conducteur recouvert d'un vernis protecteur, il faut aussi munir la tranche, après découpage, d'un vernis protecteur si l'on veut éviter que le (ou les) milieu(x) électrolytique(s) n'attaquent la contre-électrode par la tranche. On conçoit qu'un tel procédé devienne coûteux, voire impraticable à partir d'un certain degré de finesse exigé pour les "lignes".

C'est pourquoi ont été proposées d'autres méthodes fondées sur le dépôt du matériau constituant la contre-électrode par un procédé d'impression, tel que la sérigraphie ou le jet d'encre. Mais ces procédés eux-mêmes se heurtent à certaines difficultés qui rendent malaisée, sinon impossible, la réalisation de contre-électrodes conductrices, très fines et non corrodables. Ainsi, par exemple, la précision qui peut être atteinte par la sérigraphie s'accommode très mal du dépôt par recouvrement successif de plusieurs couches, certaines - telles que la pâte d'argent -, destinées à assurer la conductivité de la ligne, d'autres, - telles que l'encre chargée de graphite -, destinées à assurer la protection de cette ligne contre la corrosion. Le jet d'encre, autre procédé qui pourrait assurer la finesse désirée, s'accommode mal de compositions chimiques comportant des particules ou des micelles qui devraient être déposées, ces particules ou micelles bouchant la buse de distribution ou s'opposant au fractionnement du jet en gouttes suffisamment fines.

L'invention a pour objectif de résoudre les inconvénients qui viennent d'être exposés dans la réalisation de dispositifs modulateurs de la lumière fonctionnant selon un procédé électrochromique, qui, s'ils constituent des écrans ou afficheurs comportant de petites cellules en grand nombre commandées selon un mode matriciel multiplexé, nécessitent la réalisation de lignes et de colonnes conductrices suffisamment fines, les "colonnes" étant, par exemple, placées sur la face avant transparente de l'écran ou afficheur, et les "lignes" sur la face arrière non transparente, avec interposition du milieu électrolytique, différent selon les procédés et pouvant comporter plusieurs couches et être fortement corrosif, et, qui, en cas de colonnes de longueur importante, peuvent nécessiter la réalisation d'amenées de courant en des emplacements autres qu'aux extrémités, cet objectif d'amenée de courant supplémentaire s'appliquant également aux modulateurs du type ci-dessus, dans lequel les contre-électrodes sont également transparentes ainsi qu'aux modulateurs précités comportant des pixels de grande dimension.

Selon l'invention, il est proposé de réaliser, pour les types de modulateurs qui viennent d'être indiqués au précédent paragraphe, le réseau des contre-électrodes en fines lignes et/ou le dispositif d'amenée de courant supplémentaire au sein du modulateur, sous la forme d'un assemblage, selon un schéma approprié, de conducteurs en fils ou fibres, isolés et/ou maintenus en place par d'autres fils non conducteurs, cet assemblage étant réalisé par des techniques susceptibles d'une très grande productivité, dérivées de technologies éprouvées dans l'industrie textile.

Dans le cas du réseau de contre-électrodes en fines lignes, de nombreuses possibilités d'assemblage sont offertes, comme cela est illustré ci-après, et la régularité des fils et les performances de précision et de débit des machines textiles permettent de réaliser, dans des conditions très économiques, un tissu ou une nappe composite à base de fils conducteurs et non conducteurs, qui fournit avec précision les fines lignes conductrices souhaitées, parfaitement isolées entre elles, avec un écartement d'une grande finesse et d'une grande régularité. Dans le cas du dispositif d'amenée de courant supplémentaire, l'assemblage selon l'invention prendra avantageusement la forme d'une grille à fils de trame conducteurs et à fils de chaîne, non conducteurs, ou réciproquement. On pourra ainsi positionner en une seule fois un ensemble de fils conducteurs d'amenée de courant supplémentaire, ce qui facilitera la fabrication des modulateurs de tous types, offrant dans ce cas l'avantage complémentaire d'un positionnement relatif précis de la grille par rapport au fin réseau des colonnes d'électrodes transparentes, le cas échéant de contre-électrodes transparentes, des écrans ou afficheurs à petits pixels.

La présente invention a donc pour objet le produit industriel nouveau que constitue un dispositif de modulation de la lumière fonctionnant d'après un procédé électrochromique, comportant :
- un premier substrat, transparent ou substantiellement transparent, qui porte au moins une électrode de travail, en couche mince, transparente ou substantiellement transparente et électroniquement conductrice ;
- un second substrat, écarté transversalement par rapport au premier substrat et portant au moins une contre-électrode, électroniquement conductrice, ledit second substrat et la (ou les) contre-électrode(s) associée(s) pouvant être transparents ou substantiellement transparents ;
la configuration des électrodes et contre-électrodes sur leurs substrats respectifs et leur disposition relative étant choisies pour former une cellule ou juxtaposition de cellules de modulation de la lumière ;
- au moins une couche de matériau électrolytique entre électrode(s) de travail et contre-électrode(s), dont la composition permet d'assurer l'électrochromisme ;
- des moyens d'amenée du courant électrique aux extrémités de la (ou des) électrode(s) de travail et de la (ou des) contre-électrode(s), pouvant être complétés par des moyens d'amenée de courant électrique au sein de la (ou des) électrode(s) de travail et/ou de la (ou des) contre-électrode(s) si celle(s)-ci est (ou sont) transparente(s) ou substantiellement transparente(s), des moyens d'adressage pouvant être prévus dans le cas d'une juxtaposition de cellules pour les commander sélectivement ;
- des moyens de protection des électrodes de travail et des contre-électrodes et des moyens de protection de la (ou des) couche(s) de matériau électrolytique,
caractérisé par le fait que, pour la réalisation d'un réseau de contre-électrodes devant être configuré suivant de fines lignes et/ou pour la réalisation des moyens d'amenée de courant supplémentaire à des électrodes et/ou à des contre-électrodes dans le cas où ces dernières sont transparentes ou substantiellement transparentes, il est constitué un assemblage de fils conducteurs et de fils non conducteurs, de type tissu, nappe ou grille, lesdits fils non conducteurs étant disposés relativement aux fils conducteurs pour assurer une séparation de ceux-ci et/ou pour contribuer à la tenue dudit assemblage.

On utilise, pour constituer le réseau des contre-électrodes, un fil conducteur non corrodable, par exemple une fibre de carbone (il convient de choisir, de préférence, des fibres à haute conductivité) ou un fil de métal ou d'alliage non corrodé par le milieu électrolytique choisi y compris lorsque le courant passe dans la cellule (ce peut être par exemple de l'acier inox 18-10, ou dans certains cas, du titane, du tungstène ou du chrome, etc.) ou encore un fil de métal conducteur protégé du contact avec le milieu électrolytique par un vernis raisonnablement conducteur, formé, par exemple, de particules de graphite dans un liant polymérisable, tels qu'on en trouve dans le commerce.

Pour constituer un assemblage d'amenée de courant supplémentaire au sein d'une électrode ou d'un réseau d'électrodes de travail ou d'une contre-électrode ou d'un réseau de contre-électrodes transparentes, on utilise un fil conducteur du même type que précédemment, de très bonne conductivité ; lorsqu'il est en métal corrodable, il est avantageusement doté d'une gaine de matière thermoplastique, laquelle est susceptible de fluer par application de chaleur et de pression lors de sa mise en contact avec la (ou les) électrode(s) ou contre-électrode(s) pour dégager le conducteur le long des génératrices de contact.

Les fils non conducteurs d'un assemblage sont constitués par des fibres non-conductrices, telles que de verre, de polyester et de polyamide, etc.., pouvant comporter un revêtement extérieur thermoplastique, de telle sorte que l'assemblage puisse être soumis à une opération de calandrage à chaud lui conférant une solidité améliorée. Mais l'isolement électrique préservé par ces fils étant nécessaire seulement dans le sens perpendiculaire à leur axe, on peut employer aussi comme fil non conducteur des fils métalliques ou des fibres conductrices revêtus d'une gaine isolante, pourvu que cette dernière résiste aux opérations impliquant les températures les plus élevées utilisées dans la confection ou l'utilisation de l'afficheur ou de l'écran.

Dans le cas où les électrodes et contre-électrodes sont réalisées suivant de fines lignes en vue de la commande du dispositif selon un mode matriciel multiplexé, le réseau des contre-électrodes est avantageusement formé par les fils conducteurs d'une chaîne obtenue par ourdissage d'une alternance de n fils conducteurs adjacents et de p fils non conducteurs adjacents, n et p étant chacun au moins égal à 1, des groupes de fils adjacents pouvant avoir été remplacés par des rubans obtenus chacun par laminage d'un fil de plus grande section.

Conformément à une première variante, la chaîne obtenue par ourdissage est rendue solidaire par l'utilisation, sur sa face opposée à celle en contact avec le milieu électrolytique, d'un film adhésif constituant le substrat de base ; conformément à une seconde variante, l'assemblage des fils de chaîne est maintenu par une trame de fils non conducteurs, dont l'écartement est égal au pas des pixels le long desdits fils de chaîne, ou à un multiple entier de ce pas.

Un vernis conducteur et/ou certaines couches constituant le milieu électrolytique peut (ou peuvent) avoir été appliqué(s) sur les fils conducteurs individuels (ou rubans) de ces réseaux de contre-électrodes, avant leur assemblage par ourdissage, ou être appliqué sur des nappes de ces fils conducteurs organisées sur des peignes ou organes analogues lors de l'ourdissage, par guidage desdites nappes dans un bain de la composition d'enrobage, puis dans une zone de polymérisation-séchage, avant que lesdites nappes se rejoignent pour se juxtaposer.

Dans le cas où le dispositif de modulation de la lumière consiste en un écran couleur commandé selon un mode matriciel multiplexé, dans lequel les pixels sont distribués selon un réseau régulier comportant au moins trois couleurs de base distribuées régulièrement le long des "lignes" et des "colonnes", il est intéressant que les couches contenant les pigments colorants aient été appliquées sur des nappes des fils conducteurs organisées sur des peignes ou organes analogues lors de l'ourdissage, par impression par flexogravure ou par tout autre procédé, les fils d'une même nappe recevant des impressions transversales successives, dont la largeur correspond à celle d'un pixel et qui sont formées avec l'alternance de couleurs requise, les impressions conduites sur les différentes nappes étant décalées pour que la distribution régulière des pixels colorés recherchée apparaisse sur la nappe finale obtenue lorsque les différentes nappes se rejoignent pour se juxtaposer.

Les moyens d'amenée de courant supplémentaire au sein de la (ou des) électrode(s) de travail ou de la (ou des) contre-électrode(s) si celle(s)-ci est (ou sont) transparente(s) consistent avantageusement en une grille dont les fils de trame sont des fils conducteurs et les fils de chaîne sont des fils non conducteurs, ou réciproquement, ladite grille étant appliquée et fixée contre la (ou les) électrode(s) de travail associée ou la (ou les) contre-électrode(s) associée(s), le contact s'effectuant avantageusement suivant de fines bandes. A cet effet, il peut être intéressant d'utiliser des fils conducteurs de section carrée.

Par ailleurs, dans le cas où les fils conducteurs de la grille comportent une gaine de matière plastique susceptible de fluer et les fils non conducteurs sont constitués par des fils conducteurs du même type, mais revêtus d'une gaine isolante, la gaine fluable des fils conducteurs est choisie en une matière thermoplastique, et la gaine utilisée pour rendre les autres fils non conducteurs transversalement est choisie en une matière résistant à la chaleur, de type émail ou matière thermodurcissable à haute température.

Dans le cas d'un dispositif de modulation de la lumière dans lequel les électrodes de travail et les contre-électrodes sont disposées en réseau de fines lignes, en formant respectivement des "colonnes" et des "lignes" en vue de la commande dudit dispositif selon un mode matriciel multiplexé, les fils conducteurs sont disposés pour être en contact avec les parties conductrices et les fils non conducteurs sont disposés pour se situer en regard de parties non conductrices séparant les "lignes" du réseau de contre-électrodes, la distance entre les fils non conducteurs correspondant au pas des "lignes" ou à un multiple entier de ce pas.

Dans un mode de réalisation particulier, les fils conducteurs sont disposés pour être en contact avec chacune des parties conductrices, le long de leurs deux bordures, deux fils conducteurs voisins destinés à s'appliquer sur deux parties conductrices adjacentes étant reliés par au moins un autre fil parallèle, non conducteur.

L'invention porte aussi sur un appareillage pour la fabrication d'un réseau de contre-électrodes en fines lignes et son substrat associé, consistant en un assemblage tel que défini ci-dessus, caractérisé par le fait qu'il consiste en un ourdissoir dans lequel les fils conducteurs et les fils non conducteurs sont organisés en nappes sur des peignes ou organes analogues, puis les nappes sont réunies en une nappe finale, les fils conducteurs et non conducteurs étant juxtaposés avec l'alternance choisie sur un cylindre doté d'encoches, la nappe finale étant alors enroulée sur le tambour de l'ourdissoir, le cas échéant recueillie sur un film adhésif, au moins un poste d'enrobage et/ou au moins un poste d'impression des fils conducteurs pouvant être disposé(s) sur le trajet de nappes organisées sur les peignes ou organes analogues.

Lorsqu'il n'y a pas besoin d'assurer un positionnement précis de la grille par rapport à l'électrode ou contre-électrode transparente, on peut fixer la grille sur la plaque transparente revêtue de sa couche conductrice, par exemple, par une opération de laminage à chaud faisant fluer la gaine thermoplastique. Cependant, lorsqu'un positionnement précis est nécessaire, ce dispositif peut ne pas suffire, c'est pourquoi l'invention porte aussi sur un appareillage pour la fabrication d'un réseau d'électrodes ou contre-électrodes transparentes ou substantiellement transparentes, en couche mince et en fines lignes, auquel est associé une grille d'amenée de courant supplémentaire telle que définie ci-dessus, et permettant de réaliser l'assemblage final d'un écran ou afficheur, caractérisé par le fait qu'il comporte :
- une table de travail percée de trous disposés selon le réseau de la grille ;
- une plaque disposée sous la table de travail, parallèlement à celle-ci, portant des aiguilles de section correspondant sensiblement aux dimensions d'une maille de la grille, ladite plaque pouvant monter et descendre, respectivement pour faire saillir les aiguilles à travers les trous de la table de travail, en vue du positionnement de la grille sur celle-ci, et pour les effacer, en vue de l'application, sur la grille ainsi positionnée, du substrat transparent sur lequel ont été déposées au préalable les électrodes ou contre-électrodes ;
- des moyens supportant ledit substrat transparent et aptes à le faire descendre sur la grille en place sur la table de travail et de le relever une fois qu'il a été rendu solidaire de la grille ;
- des moyens de réglage portés par la table de travail et/ou lesdits moyens supports, afin d'assurer un positionnement exact des fils conducteurs de la grille le long des lignes conductrices du réseau d'électrodes ou contre-électrodes ; et
- des moyens pour appliquer chaleur et pression à l'ensemble grille-substrat, dans le cas où les fils conducteurs sont dotés d'une gaine thermoplastique ;
ladite table de travail pouvant être utilisée, une fois l'ensemble obtenu grille-électrodes ou contre-électrodes, pour recevoir le réseau de contre-électrodes et son substrat et la (ou les) couche(s) électrolytique(s) intermédiaire(s), les moyens supports portant l'ensemble précité grille-électrodes ou contre-électrodes étant alors redescendus sur la table en vue de constituer le montage final de l'écran ou de l'afficheur.

Pour mieux illustrer l'objet de la présente invention, on va en décrire ci-après, à titre indicatif et non limitatif, plusieurs modes de réalisation avec référence au dessin annexé.

Sur ce dessin :
- les Figures 1 à 3 représentent chacune une vue partielle en perspective, à échelle agrandie, d'un mode de réalisation d'un réseau de contre-électrodes et de son substrat pour un dispositif électrochromique de modulation de la lumière conforme à la présente invention ;
- les Figures 4 et 5 sont des représentations schématiques respectivement de dessus et en élévation latérale d'un appareillage pour la fabrication d'un réseau de contre-électrodes du type de celui représenté sur la Figure 2 ;
- la Figure 6 est une vue partielle, à échelle agrandie, selon VI-VI de la Figure 4, du cylindre à encoches équipant l'appareillage des Figures 4 et 5 ;
- la Figure 7 est un schéma montrant la formation, à l'aide d'un dispositif du type de celui des Figures 4 et 5, d'un réseau de contre-électrodes pour un dispositif d'affichage en couleur, et la Figure 8 représente, également schématiquement, le réseau ainsi obtenu ;
- la Figure 9 est une vue partielle en perspective éclatée d'un dispositif électrochromique de modulation de la lumière comportant le réseau de contre-électrodes de la Figure 2 ;
- la Figure 10 est une vue analogue à la Figure 9 montrant le dispositif électrochromique équipé d'une grille d'amenée de courant supplémentaire au réseau des électrodes transparentes de ce dispositif ;
- la Figure 11 est une vue latérale partielle du dispositif de la Figure 10 à l'état assemblé ;
- la Figure 12 est une vue schématique en perspective partielle d'un substrat transparent muni d'une grille réalisée conformément à une variante de celle des Figures 10 et 11 ;
- la Figure 13 est une vue schématique en perspective d'un appareillage pouvant être utilisé pour le montage du dispositif de la Figure 11, les aiguilles de positionnement de la grille des Figures 10 et 11 étant en position escamotée ;
- la Figure 14 est, à plus grande échelle, une vue d'un détail de la table de travail de l'appareillage de la Figure 13, la grille étant représentée en cours de mise en place, sa position étant fixée par les aiguilles précitées faisant saillie au-dessus de ladite table de travail.

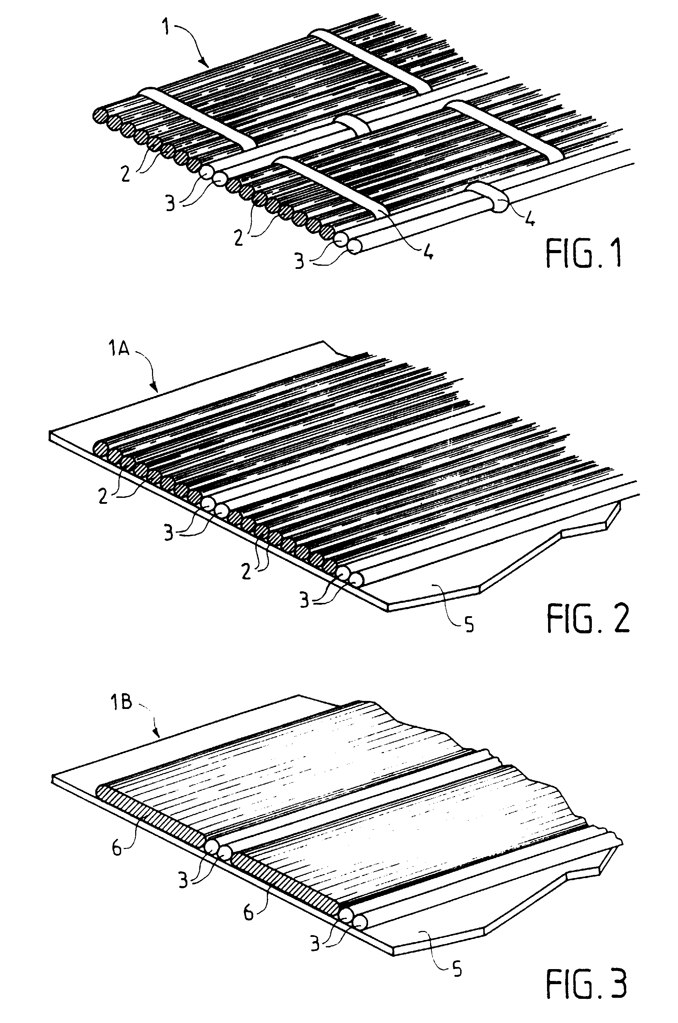

Si l'on se réfère à la Figure 1, on voit que l'on a représenté un assemblage 1 de type tissu, dont la chaîne est constituée par des fils serrés les uns contre les autres et disposés suivant une alternance de n fils conducteurs 2 et de p fils non conducteurs 3, et dont la trame est constituée de fils non conducteurs 4, espacés régulièrement les uns des autres, d'une distance e, en faisant passer un fil de trame 4 sur les groupes de n fils conducteurs 2 adjacents de la chaîne et sous les groupes de p fils non conducteurs 3, et le fil de trame 4 voisin de façon inverse, pour obtenir la disposition en quinconce telle que représentée sur la Figure 1.

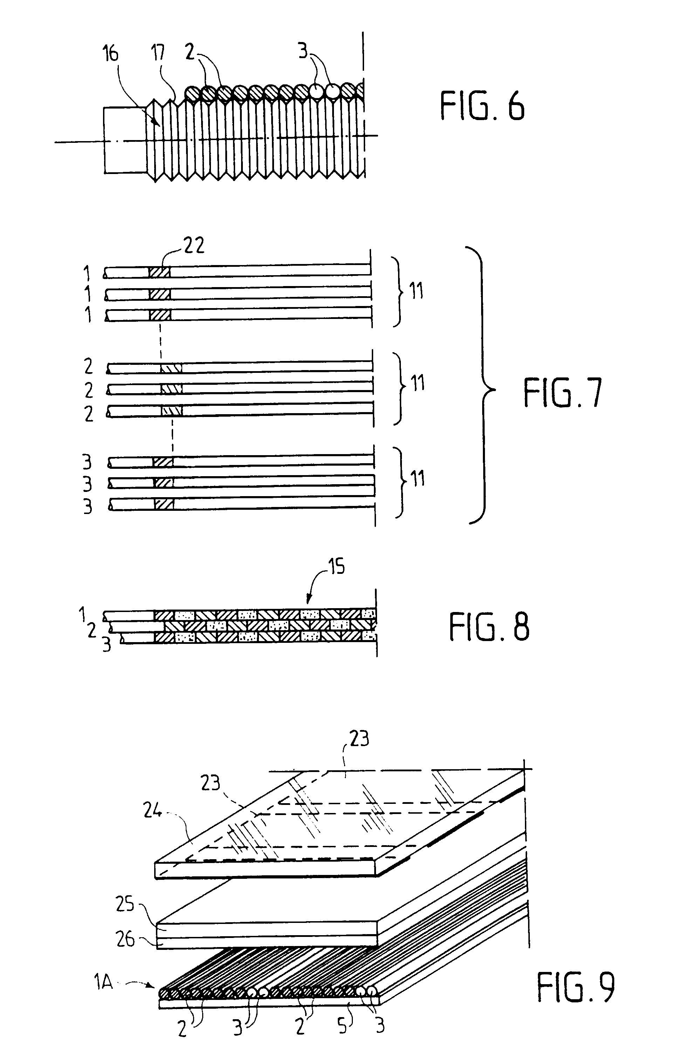

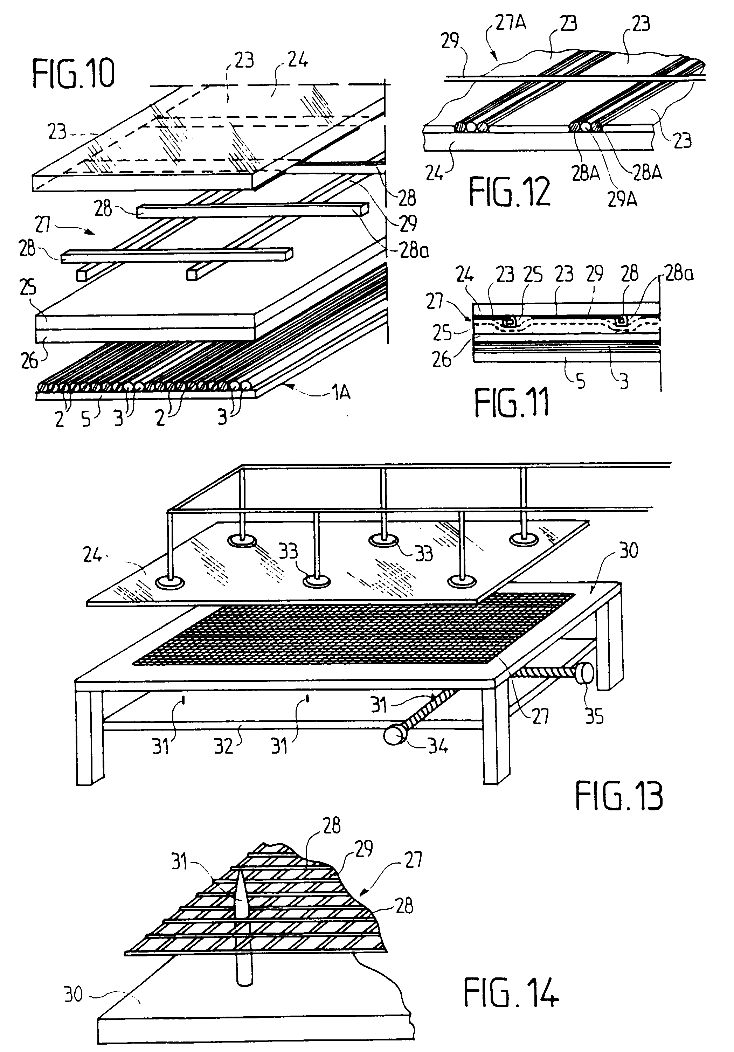

Les fils conducteurs 2 constituent le réseau de contre-électrodes des dispositifs de modulation de la lumière qui seront décrits ci-après avec référence aux Figures 9 et 10, et les fils non conducteurs 3 et 4 assurent la tenue des fils 2 suivant un réseau de bandes régulières dont la largeur est fonction des caractéristiques du dispositif de modulation de la lumière à réaliser. La distance entre les fils de trame 4 est également fonction de ces caractéristiques.

Dans l'exemple représenté, si l'on cherche à réaliser des pixels de 300 µm de largeur, de 400 µm de hauteur, la distance entre les contre-électrodes étant de 100 µm, on peut choisir des fils 2, 3 et 4 de 50 µm de diamètre, auquel cas n = 8, p = 2 et e est égal à 0,3 mm ou à un multiple entier de 0,3 mm.

La variante représentée sur la Figure 2 se distingue de celle de la Figure 1 par le fait qu'il n'a pas été envisagé de fils de trame 4 et que les fils conducteurs 2 en alternance avec les fils non conducteurs 3 sont appliqués sur un film adhésif 5 qui les maintient dans la régularité requise.

Quant à la variante représentée sur la Figure 3, elle découle de celle de la Figure 2 par le fait que chaque groupe de n fils conducteurs 2 est remplacé par un ruban conducteur 6 obtenu par laminage d'un fil de plus grande section. Ainsi, par rapport à l'exemple de la Figure 1, chaque groupe des 8 fils conducteurs est remplacé par un ruban de 400 µm de largeur et de 50 µm d'épaisseur, obtenu par laminage d'un fil d'environ 16/100 mm de diamètre.

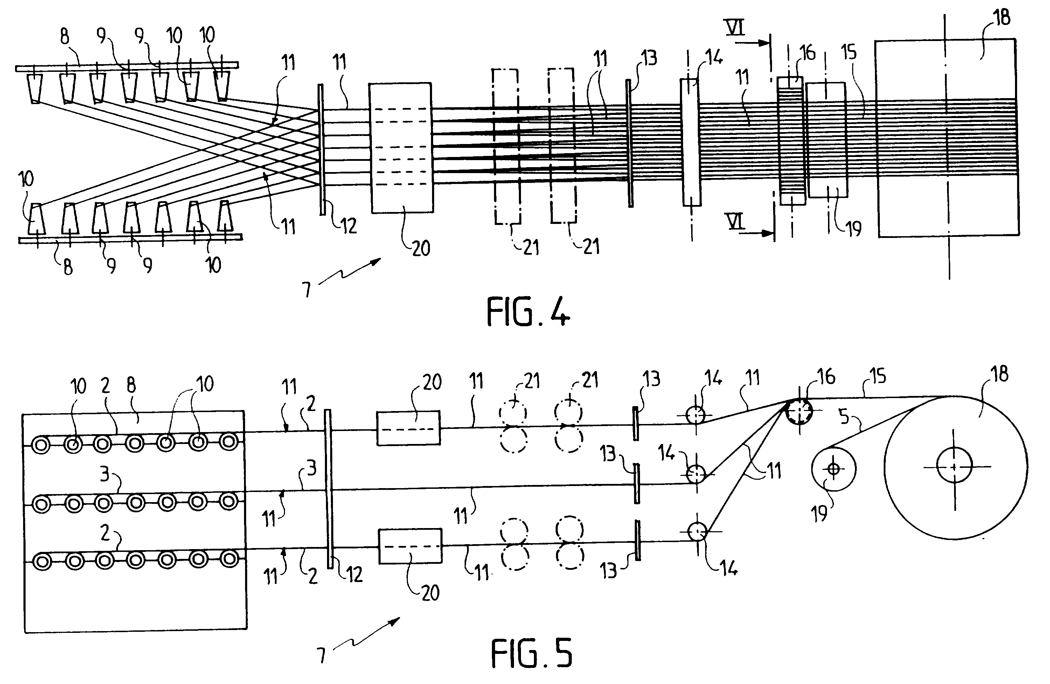

L'appareil d'ourdissage représenté schématiquement sur les Figures 4 et 5 permet d'obtenir l'assemblage 1A de type nappe de la Figure 2 ; l'assemblage 1B de la Figure 3 s'obtient suivant le même principe ; quant à l'assemblage 1 de type tissu, sa chaîne est obtenue sur l'appareil d'ourdissage, et sa trame est disposée à l'aide des dispositifs bien connus dans l'industrie textile (métiers à tisser).

L'ourdissoir 7 comporte, de façon classique, des cantres 8 sur lesquels sont installées des broches 9. Les différentes bobines 10 des fils 2 et 3 sont enfilées sur les broches 9, et la tension des fils 2 et 3 est réglée selon leur nature, l'élasticité des fils non conducteurs 3 n'étant pas forcément la même que celle des fils (ou rubans) conducteurs 2. Les fils 2 et 3 sont organisés en nappes 11 (au nombre de trois dans l'exemple représenté) en passant dans une plaque-guide 12 percée d'oeillets ou de fentes, puis sur des peignes 13. Après passage sur ou sous des cylindres de guidage 14, elles sont réunies en s'imbriquant pour constituer la nappe finale 15 où les fils conducteurs 2 et non conducteurs 3 sont juxtaposés avec l'alternance désirée sur un cylindre 16 comportant des encoches 17, comme on peut le voir en coupe sur la Figure 6. La nappe finale 15 vient alors s'enrouler sur le tambour 18 de l'ourdissoir, qui la recueille en même temps que le film adhésif 5, installé sur un cylindre 19, et fixe ainsi les fils 2 et 3 côte à côte dans la disposition prévue.

Comme indiqué ci-dessus en liaison avec la Figure 3, on peut remplacer, sur l'ourdissoir 7, des groupes de fils adjacents par un ruban ; en l'occurrence, les groupes de n fils conducteurs 2 ont été remplacés par des rubans 6. Par ailleurs, comme indiqué ci-dessus en liaison avec la Figure 1, on peut ne pas prévoir de film adhésif 5 sur l'ourdissoir 7 et mettre alors en place, de façon classique, une trame de fils non conducteurs 4 par une opération complémentaire de tissage.

En outre, comme indiqué plus haut, les fils (ou rubans) conducteurs 2, 6 peuvent être revêtus à l'avance de certaines couches exigées par la mise en oeuvre du procédé électrochrome choisi. Cependant, ce dépôt peut aussi être réalisé au cours même de l'opération d'ourdissage. Il suffit pour cela d'intercaler sur le trajet des nappes 11 convenablement constituées, avant qu'elles se rejoignent pour se juxtaposer sur le cylindre 16, une installation de revêtement symbolisée en 20 sur les Figures 4 et 5, qui peut prendre des formes très variées selon la nature du fil et du revêtement. Pour installer un vernis graphité, par exemple, on peut faire passer les fils dans un bain du liant polymérisable liquide comportant des particules de graphite, puis dans une zone de polymérisation - séchage, par effet thermique ou autre.

En outre, la séparation des nappes que permet l'ourdissoir se prête très bien à l'impression de certaines couches, par exemple celles qui comprennent les pigments colorés, qui doivent être distribuées avec une composition différente sur les pixels adjacents.

On sait que, dans un écran en couleur, les pixels sont distribués selon un réseau régulier qui comporte trois ou quatre couleurs de base distribuées régulièrement le long des "lignes" et des "colonnes". Un pixel déterminé est de couleur différente de celle des pixels qui l'encadrent.

Dans l'ourdissoir, on peut réaliser des nappes 11 de fils (ou rubans) conducteurs 2, 6 correspondant à tous les pixels qui sont de même couleur sur une ligne déterminée. En passant entre les cylindres d'une installation de coloration 21, par exemple de flexogravure, telle que représentée en traits mixtes sur les Figures 4 et 5, ces nappes 11 reçoivent l'impression de fines lignes 22, dont la largeur correspond à la largeur d'un pixel. La précision demandée à l'impression ne concerne que la largeur de la ligne, puisque les fils (ou rubans) adjacents, qui eux, doivent recevoir une autre couleur font partie, à ce moment-là, d'une autre nappe 11 qui passe entre d'autres cylindres 21. La parfaite synchronisation des impressions est réalisable par un jeu d'engrenages qui asservit les mouvements des différents cylindres.

Sur les Figures 7 et 8, on a illustré le principe de la formation de ces pixels en trois couleurs, 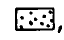 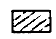 et 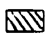 représentant chacun des pixels bleus, verts et rouges, à partir de trois nappes 11, qui lors de leurs passages dans l'installation 21, reçoivent des lignes successives 22 des trois couleurs en alternance, avec un décalage de couleurs entre les trois nappes, puis sont juxtaposées sur le cylindre 16 de façon que soit constitué, sur la nappe finale 15, l'assemblage de couleurs recherché.

En outre, si on le souhaite, on peut conférer aux assemblages 1, 1A, 1B, une meilleure solidité, en utilisant pour les fils non conducteurs 3, 4, une fibre à revêtement thermoplastique, et en faisant passer l'assemblage entre deux rouleaux à une température proche du point de ramollissement de la matière thermoplastique, selon la technique du calandrage employée dans l'industrie textile.

L'assemblage 1A des contre-électrodes 2 et son substrat associé formé par les fils 3 et le film-support adhésif 5 est représenté sur la Figure 9 en combinaison avec le réseau d'électrodes transparentes 23, constitués par un dépôt en fines lignes d'ITO par exemple, sur une plaque de verre 24, avec interposition de couches électrolytiques 25, 26. A titre d'exemple, on peut disposer des couches électrolytiques telles que décrites dans le brevet français n° 2 618 571, par exemple dont l'une contient un pigment blanc, tel que le dioxyde de titane. Mais on peut appliquer le procédé à d'autres systèmes électrochromiques décrits dans la littérature (Cf., par exemple, SAE Technical Paper Series 910542 ; 910545 - International Congress and Exposition Detroit, Michigan, 25 février-ler mars 1991), tels que ceux qui mettent en oeuvre des matériaux redox, comme le viologène, le bleu de Prusse, les polymères électroactifs (polypyrrole, polythiophène), ou d'autres matériaux organiques, ou encore des systèmes comprenant des oxydes de métaux de transition, tels que WO₃, MoO₃, TiO₂, V₂O₅, Bi₂O₃, PbO₂, CUOₓ, Ni(OH)₂, IrO₂, COOₓ, et d'une manière générale, à tous autres systèmes électrochromiques décrits dans la littérature.

Les Figures 10 et 11 représentent de façon schématique un écran ou afficheur selon l'invention, également composé de pixels en grand nombre commandés selon un mode matriciel ("lignes" et "colonnes") multiplexé ; cet écran ou afficheur comporte des moyens conformes à l'invention pour résoudre le problème de l'amenée de courant en des points des colonnes, en supplément des amenées aux deux extrémités. Ces moyens consistent en une grille 27, dont les fils de trame 28 sont conducteurs et dont les fils de chaîne 29 sont non conducteurs (ou réciproquement), et dont la maille correspond à la taille des pixels. (Les fils de chaîne - ou de trame - pourraient cependant être séparés par une distance égale à un multiple du pas en hauteur des pixels). Cette grille 27 est ensuite appliquée sur une plaque de verre 24, où les "colonnes" 23 ont déjà été tracées dans la couche conductrice transparente, par exemple par dépôt sous vide d'ITO. La grille 27 ayant une certaine tenue, la mise en place des fils conducteurs 28 avec précision le long de chaque "colonne" 23, est facilitée. Au lieu d'avoir à positionner chaque fil, on a ici la possibilité de positionner d'un seul. coup l'ensemble des fils, la grille 27 étant ensuite maintenue en place par exemple par quelques points de colle. L'exemple cité ci-dessous décrit un processus pratique qui permet d'arriver à ce résultat.

On a intérêt à utiliser un fil conducteur 28 aussi fin que possible, et par conséquent, pour un courant donné à transporter, un fil fait dans une matière aussi peu résistante que possible. L'argent ou le cuivre sont particulièrement indiqués. Si le conducteur 28 est fait d'un métal corrodable par l'électrolyte, il faut alors le protéger de celui-ci en interposant une gaine entre l'électrolyte 25, 26 et lui. Mais il faut cependant que des points de contact subsistent entre la couche conductrice 23 et le fil conducteur 28 qui sert à alimenter en courant les parties de la "colonne" éloignées des bords de l'écran. Une des manières de parvenir de façon simple à ce résultat, consiste à utiliser pour confectionner la grille 27 un fil conducteur 28 , qui, s'il est corrodable, est recouvert d'une gaine thermoplastique 28a. C'est ce qui est représenté sur la Figure 11. Pour assurer le contact électrique entre le fil 28 et la bande de couche transparente conductrice 23 qu'il doit alimenter, il suffit d'appliquer une pression sur la grille 27 après sa mise en place tout en chauffant la plaque transparente 24 : la gaine thermoplastique 28a flue et dégage le métal le long de la génératrice de contact.

Les fils de la grille 27 peuvent avantageusement être de section carrée, comme représenté sur les Figures 10 et 11, ce qui permet un meilleur contact des fils conducteurs 28 contre les électrodes transparentes 23.

Par ailleurs, comme illustré sur la Figure 12, on peut remplacer la grille 27 par une grille 27A, dont les fils de trame sont constitués par deux fils conducteurs 28A reliés par un fil non conducteur, parallèle 29A. Les deux fils 28A viennent s'appliquer respectivement contre les bordures de deux "colonnes" 23 adjacentes, le fil intermédiaire 29A venant s'appliquer contre la partie non conductrice du substrat 24. Les fils 28A pourraient aussi comporter une gaine 28a.

Ainsi, dans son ensemble, la réalisation pratique d'un tel écran peut se faire par exemple selon le processus suivant, décrit avec référence aux Figures 13 et 14 :
1 - On tisse une grille 27 composée comme on vient de l'indiquer.
2 - On installe une table de travail 30 percée d'un réseau de trous à travers laquelle peuvent passer des aiguilles 31, dont la section (sauf à l'extrémité effilée) est légèrement inférieure aux dimensions d'un pixel, les trous étant disposés selon le réseau de la grille 27. Les aiguilles 31 sont portées par une deuxième plaque 32, située au-dessous de la table de travail 30, parallèlement à celle-ci. Cette plaque 32 est munie d'un dispositif permettant de la faire monter et descendre, afin de faire saillir les aiguilles 31 à travers la table de travail 30, ou, au contraire, de les effacer.
3 - Les aiguilles 31 étant légèrement sorties, la grille 27 est mise en place en enfilant les aiguilles 31 dans les mailles correspondantes ; puis, la grille 27 est descendue au contact de la table de travail 30. Quelques points de colle sont disposés sur la grille 27.
4 - La plaque de verre 24, sur laquelle ont été disposées les "colonnes" 23 en couche conductrice par l'un des procédés mentionnés plus haut, est alors présentée, couche conductrice en-dessous, à l'aide d'un dispositif, pneumatique ou autre (ventouses 33 sur la Figure 12), qui la soutient au-dessus et parallèlement à la table de travail 30. Elle est descendue au contact de la grille 27, cependant que les aiguilles 31 s'effacent à travers la table de travail 30. Ce mouvement de descente est contrôlé en X et Y par un réglage micrométrique (tel qu'indiqué en 34 et 35) qui commande soit la table de travail 30, soit le dispositif 33 qui tient la plaque de verre 24. De cette façon, il est possible d'ajuster et de coller la plaque de verre 24 sur la grille 27, de telle sorte que les fils conducteurs 28 soient exactement placés le long des "colonnes" 23.
5 - Le cas échéant, on applique une pression sur la plaque de verre 24 tout en balayant la surface par un radiateur infrarouge dont l'objet est de faire fluer la gaine thermoplastique 28a des fils conducteurs 28 de la grille 27.
6 - Séparément, on confectionne le substrat portant les contre-électrodes de l'écran, qui en constituera la couche de base, par exemple l'assemblage de l'une des Figures 1 à 3. Après l'avoir placé sur un film-support, on place sur lui les couches 25, 26 qui composent le milieu électrolytique et, le cas échéant, les couches de matériau électrochromique. On rappelle que certaines de ces couches peuvent avoir été placées directement sur les fils avant ourdissage ou avoir été placées sur l'assemblage 1, 1A ou 1B pendant l'ourdissage.
7 - Après avoir relevé la plaque de verre 24 grâce à son dispositif de préhension (la grille 27, devenue solidaire se soulève aussi), on place l'empilement de couches constitué au paragraphe 6 sur la table de travail 30. Puis on fait redescendre la plaque de verre 24 pour former le "sandwich" qui constitue la plaque écran.
8 - Il convient de procéder au scellement sur les tranches et à la reprise des connexions électriques. Celles-ci se font, pour les "colonnes" 23, par la reprise à partir des fils conducteurs 28 de la grille 27 et, pour les "lignes", à partir des fils conducteurs 2 de l'assemblage 1, 1A ou 1B. Il peut être avantageux d'utiliser, comme film-support (indiqué au paragraphe 5 ci-dessus), une carte support de circuit imprimé sur laquelle est directement gravé le circuit de commande de l'écran.

Il est bien entendu que les modes de réalisation ci-dessus décrits ne sont aucunement limitatifs et pourront donner lieu à toutes modifications désirables, sans sortir pour cela du cadre de l'invention.

## Revendications

1. Dispositif de modulation de la lumière fonctionnant d'après un procédé électrochromique, comportant :
- un premier substrat (24), transparent ou substantiellement transparent, qui porte au moins une électrode de travail (23) , en couche mince, transparente ou substantiellement transparente et électroniquement conductrice ;
- un second substrat (5, 3, 4) écarté transversalement par rapport au premier substrat (24) et portant au moins une contre-électrode (2, 6) électroniquement conductrice, ledit second substrat et la (ou les) contre-électrode(s) associée(s) pouvant être transparents ou substantiellement transparents ;
la configuration des électrodes (23) et contre-électrodes (2, 6) sur leurs substrats respectifs et leur disposition relative étant choisies pour former une cellule ou juxtaposition de cellules de modulation de la lumière ;
- au moins une couche (25, 26) de matériau électrolytique entre électrode(s) de travail (23) et contre-électrode(s) (2, 6), dont la composition permet d'assurer l'électrochromisme ;
- des moyens d'amenée du courant électrique aux extrémités de la (ou des) électrode(s) de travail (23) et de la (ou des) contre-électrode(s) (2, 6), pouvant être complétés par des moyens d'amenée de courant électrique au sein de la (ou des) électrode(s) de travail (23) et/ou de la (ou des) contre-électrode(s) si celle(s)-ci est (ou sont) transparente(s) ou substantiellement transparente(s), des moyens d'adressage pouvant être prévus dans le cas d'une juxtaposition de cellules pour les commander sélectivement ;
- des moyens de protection des électrodes de travail (23) et des contre-électrodes (2, 6) et des moyens de protection de la (ou des) couche(s) de matériau électrolytique (25, 26),
caractérisé par le fait que, pour la réalisation d'un réseau de contre-électrodes devant être configuré suivant de fines lignes et/ou pour la réalisation des moyens d'amenée de courant supplémentaire à des électrodes et/ou à des contre-électrodes dans le cas où ces dernières sont transparentes ou substantiellement transparentes, il est constitué un assemblage de fils conducteurs (2, 6, 28, 28A) et de.fils non conducteurs (3, 4, 29, 29A), de type tissu, nappe ou grille, lesdits fils non conducteurs (3, 4, 29, 29A) étant disposés relativement aux fils conducteurs (2, 6, 28, 28A) pour assurer une séparation de ceux-ci et/ou pour contribuer à la tenue dudit assemblage.

2. Dispositif selon la revendication 1, caractérisé par le fait qu'est utilisé, pour constituer le réseau de contre-électrodes (2, 6), un fil conducteur non corrodable, par exemple une fibre de carbone ou un fil de métal ou d'alliage non corrodé par le milieu électrolytique choisi, y compris lorsque le courant passe dans la cellule, ou encore un fil de métal conducteur protégé du contact avec le milieu électrolytique par un vernis conducteur, formé, par exemple, de particules de graphitedansun liant polymérisable; et, pour constituer un assemblage (27) d'amenée de courant supplémentaire au sein d'une électrode ou d'un réseau d'électrodes de travail (23) ou d'une contre-électrode ou d'un réseau de contre-électrodes transparentes, un fil conducteur du même type que précédemment, qui, s'il est en métal corrodable, est doté d'une gaine de matière plastique (28a) laquelle est susceptible de fluer par application de chaleur et pression lors de sa mise en contact avec la, ou les, électrode(s) (23) ou contre-électrode(s) pour dégager le conducteur le long des génératrices de contact.

3. Dispositif selon la revendication 2, caractérisé par le fait que les fils non conducteurs d'un assemblage sont constitués par des fibres non-conductrices, telles que de verre, de polyester et de polyamide, pouvant comporter un revêtement extérieur thermoplastique, de telle sorte que l'assemblage puisse être soumis à une opération de calandrage à chaud lui conférant une solidité améliorée, les fils non conducteurs pouvant également être constitués par des fils métalliques ou des fibres conductrices revêtus d'une gaine isolante, pourvu que cette dernière résiste aux opérations impliquant les températures les plus élevées utilisées dans la confection ou l'utilisation dudit dispositif.

4. Dispositif selon l'une des revendications 1 à 3, dans lequel les électrodes (23) et contre-électrodes (2, 6) sont réalisées suivant de fines lignes en vue de la commande dudit dispositif selon un mode matriciel multiplexé, caractérisé par le fait que le réseau de contre-électrodes (2) est formé par les fils conducteurs (2) d'une chaîne obtenue par ourdissage d'une alternance de n fils conducteurs adjacents (2) et de p fils non conducteurs adjacents (3), n et p étant chacun au moins égal à 1, des groupes de fils adjacents pouvant avoir été remplacés par des rubans (6) obtenus chacun par laminage d'un fil de plus grande section, ladite chaîne (2-3) pouvant être rendue solidaire par l'utilisation, sur sa face opposée à celle en contact avec le milieu électrolytique (26, 25), d'un film adhésif (5) constituant le substrat de base.

5. Dispositif selon la revendication 4, caractérisé par le fait que l'assemblage des fils de chaîne (2-3) est maintenu par une trame de fils non conducteurs (4), qui a été mise en place par une opération complémentaire de tissage et dont l'écartement est égal au pas des pixels le long desdits fils de chaîne (2-3), ou à un multiple entier de ce pas.

6. Dispositif selon l'une des revendications 4 et 5, caractérisé par le fait qu'un vernis et/ou certaines couches constituant le milieu électrolytique conducteur a (ou ont) été appliqué(s) sur les fils conducteurs individuels (2, 6) avant leur assemblage par ourdissage ou a été appliqué sur des nappes (11) de ces fils conducteurs (2, 6) organisées sur des peignes ou organes analogues (12, 13) lors de l'ourdissage, par guidage desdites nappes (11) dans un bain de la composition d'enrobage, puis dans une zone de polymérisation-séchage (en 20), avant que lesdites nappes (11) se rejoignent pour se juxtaposer.

7. Dispositif selon l'une des revendications 4 à 6, consistant en un écran couleur commandé selon un mode matriciel multiplexé dans lequel les cellules ou pixels sont distribués selon un réseau régulier comportant au moins trois couleurs de base distribuées régulièrement le long des "lignes" et des "colonnes", caractérisé par le fait que les couches contenant les pigments colorants ont été appliquées sur des nappes (11) des fils conducteurs organisées sur des peignes ou organes analogues (12, 13) lors de l'ourdissage, par impression par flexogravure ou par tout autre procédé d'impression (en 21), les fils d'une même nappe (11) recevant des impressions transversales successives (22), dont la largeur correspond à celle d'un pixel et qui sont formées avec l'alternance de couleurs requise, les impressions conduites sur les différentes nappes (11) étant décalées pour que la distribution régulière des pixels colorés recherchée apparaisse sur la nappe finale (15) obtenue lorsque les différentes nappes (11) se rejoignent pour se juxtaposer.

8. Dispositif selon l'une des revendications 1 à 7, caractérisé par le fait que les moyens d'amenée de courant supplémentaire au sein de la (ou des) électrode(s) de travail (23) ou de la (ou des) contre-électrode(s) si celle(s)-ci est (ou sont) transparente(s) consistent en une grille (27) dont les fils de trame sont des fils conducteurs (28, 28A) et les fils de chaîne sont des fils non conducteurs (29), ou réciproquement, ladite grille (27) étant appliquée et fixée contre la (ou les) électrode(s) associée(s) (23) ou contre la (ou les) contre-électrode(s) associée(s), le contact s'effectuant avantageusement suivant de fines bandes.

9. Dispositif selon la revendication 8, dans lequel les fils conducteurs (28, 28A) de la grille comportent une gaine (28a) de matière plastique susceptible de fluer et les fils non conducteurs (29) sont constitués par des fils conducteurs du même type, mais revêtus d'une gaine isolante, caractérisé par le fait que la gaine fluable est choisie en une matière thermoplastique, et la gaine utilisée pour rendre les fils (29) non conducteurs transversalement est choisie en une matière résistant à la chaleur, de type émail ou matière thermodurcissable à haute température.

10. Dispositif selon l'une des revendications 8 et 9, dans lequel les électrodes de travail (23) et les contre-électrodes (2, 6) sont disposées en réseau de fines lignes, en formant respectivement des "colonnes" et des "lignes" en vue de la commande dudit dispositif selon un mode matriciel multiplexé, caractérisé par le fait que les fils conducteurs (28, 28A) sont disposés pour être en contact avec les parties conductrices et que les fils non conducteurs (29) sont disposés pour se situer en regard de parties non conductrices (3) séparant les "lignes" du réseau de contre-électrodes (2, 6) , la distance entre les fils non conducteurs (29) correspondant au pas des "lignes" ou à un multiple entier de ce pas.

11. Dispositif selon la revendication 10, caractérisé par le fait que les fils conducteurs (28, 28A) sont disposés pour être en contact avec chacune des parties conductrices, le long de leurs deux bordures, deux fils conducteurs (28A) voisins destinés à s'appliquer sur deux parties conductrices adjacentes étant reliés par au moins un autre fil parallèle, non conducteur (29A).

12. Appareillage pour la fabrication d'un réseau de contre-électrodes en fines lignes et son substrat associé, consistant en un assemblage tel que défini à l'une des revendications 4 à 7, caractérisé par le fait qu'il consiste en un ourdissoir (7) dans lequel les fils conducteurs (2, 6) et les fils non conducteurs (3) sont organisés en nappes (11) sur des peignes ou organes analogues (12, 13), puis les nappes (11) sont réunies en une nappe finale (15), les fils conducteurs (2, 6) et non conducteurs (3) étant juxtaposés avec l'alternance choisie sur un cylindre (16) doté d'encoches, la nappe finale (15) étant alors enroulée sur le tambour (18) de l'ourdissoir (7), le cas échéant recueillie sur un film adhésif (5), au moins un poste d'enrobage (20) et/ou au moins un poste d'impression (21) des fils conducteurs (2, 6) pouvant être disposé(s) sur le trajet de nappes (11) organisées sur les peignes ou organes analogues (12, 13).

13. Appareillage pour la fabrication d'un réseau d'électrodes ou contre-électrodes transparentes ou substantiellement transparentes, en couche mince et en fines lignes, auquel est associé une grille d'amenée de courant supplémentaire, telle que définie à l'une des revendications 8 à 11, et permettant de réaliser l'assemblage final d'un écran ou afficheur, caractérisé par le fait qu'il comporte :
- une table de travail (30) percée de trous disposés selon le réseau de la grille (27) ;
- une plaque (32) disposée sous la table de travail (30), parallèlement à celle-ci, portant des aiguilles (31) de section correspondant sensiblement aux dimensions d'une maille de la grille (27), ladite plaque (32) pouvant monter et descendre, respectivement pour faire saillir les aiguilles (31) à travers les trous de la table de travail (30), en vue du positionnement de la grille (27) sur celle-ci, et pour les effacer, en vue de l'application, sur la grille (27) ainsi positionnée, du substrat transparent sur lequel ont été déposées au préalable les électrodes ou contre-électrodes ;
- des moyens (33) supportant ledit substrat (24) et aptes à le faire descendre sur la grille (27) en place sur la table de travail (30) et de le relever une fois qu'il a été rendu solidaire de la grille (27) ;
- des moyens de réglage (34, 35) portés par la table de travail (30) et/ou lesdits moyens supports (33), afin d'assurer un positionnement exact des fils conducteurs (28, 28A) de la grille (27) le long des lignes conductrices du réseau d'électrodes ou contre-électrodes ; et
- des moyens pour appliquer chaleur et pression à l'ensemble grille-substrat, dans le cas où les fils conducteurs (28, 28A) sont dotés d'une gaine thermoplastique ;
ladite table de travail (30) pouvant être utilisée, une fois l'ensemble obtenu grille-électrodes ou contre-électrodes, pour recevoir le réseau de contre-électrodes ou d'électrodes et son substrat, et la (ou les) couche(s) électrolytique(s) intermédiaire(s) (25, 26), les moyens supports (33) portant l'ensemble précité grille-électrodes ou contre-électrodes étant alors redescendus sur la table (30) en vue de constituer le montage final de l'écran ou de l'afficheur.

## Patentansprüche

1. Vorrichtung zur Lichtmodulation, die nach einem Elektrochrom-Verfahren arbeitet, mit:
- einem transparenten oder im wesentlichen transparenten ersten Substrat (24), das wenigstens eine Arbeitselektrode (23) in der Form einer dünnen, transparenten oder im wesentlichen transparenten und elektrisch leitenden Schicht trägt,
- einem zweiten Substrat (5, 3, 4), das quer zu dem ersten Substrat (24) beabstandet ist und wenigstens eine elektrisch leitende Gegenelektrode (2, 6) trägt, wobei das zweite Substrat und die zugehörige(n) Gegenelektrode(n) transparent oder im wesentlichen transparent sein kann (können); wobei die Konfiguration der Elektroden (23) und Gegenelektroden (2, 6) auf ihren jeweiligen Substraten und ihre relative Anordnung so gewählt ist, daß eine Zelle oder ein Feld nebeneinanderliegender Zellen zur Lichtmodulation gebildet wird;
- wenigstens einer Schicht (25, 26) aus elektrolytischem Material zwischen den Arbeits- (23) und Gegenelektroden (2, 6), dessen Zusammensetzung Elektrochromie ermöglicht;
- Mitteln zur elektrischen Stromzufuhr zu den Enden der Arbeits- (23) und Gegenelektroden (2, 6), die ergänzt sein können durch Mittel zur elektrischen Stromzufuhr im Mittelbereich der Arbeits- (23) und/oder Gegenelektrode(n), sofern diese transparent oder im wesentlichen transparent ist (sind), wobei im Fall eines Feldes von Zellen Adressiermittel zur selektiven Steuerung derselben vorgesehen sein können;
- Mitteln zum Schutz der Arbeits- (23) und Gegenelektroden (2, 6) und Mitteln zum Schutz der Schicht(en) (25, 26) aus elektrolytischem Material, dadurch gekennzeichnet, daß zur Bildung eines Rasters aus Gegenelektroden, das die Form feiner Linien haben muß, und/oder zur Bildung der Mittel zur zusätzlichen Stromzufuhr zu den Elektroden und/oder den Gegenelektroden, sofern letztere transparent oder im wesentlichen transparent sind, ein Verband aus leitenden Fäden (2, 6, 28, 28A) und nichtleitenden Fäden (3, 4, 29, 29A) gebildet wird, von der Art eines Gewebes, Vlieses oder Gitters, wobei die nichtleitenden Fäden (3, 4, 29, 29A) relativ zu den leitenden Fäden (2, 6, 28, 28A) angeordnet sind, um eine Trennung zwischen diesen zu gewährleisten und/oder um zur Festigkeit des Verbandes beizutragen.

2. Vorrichtung nach Anspruch 1, dadurch gekennzeichnet, daß zur Bildung des Gegenelektrodenrasters (2, 6) ein nicht korrodierbarer leitender Faden verwendet wird, beispielsweise eine Kohlefaser oder einen Faden aus Metall oder einer Legierung, die durch das gewählte elektrolytische Milieu nicht korrodierbar ist, auch nicht, wenn Strom in der Zelle fließt, oder auch ein Faden aus leitendem Metall, der gegen Berührung mit dem elektrolytischen Milieu durch einen leitenden Lack geschützt ist, der beispielsweise durch Graphitpartikel in einem polymerisierbaren Bindemittel gebildet wird, und daß zur Bildung eines Verbandes (27) zur zusätzlichen Stromzufuhr zum Mittelbereich einer Elektrode oder eines Rasters von Arbeitselektroden (23) oder einer Gegenelektrode oder eines Rasters aus transparenten Gegenelektroden ein leitender Faden von derselben Art wie zuvor verwendet wird, der, wenn er aus korrodierbarem Metall besteht, mit einer Hülle (28a) aus Kunststoff versehen ist, die, wenn sie mit der oder den Elektrode(n) (23) oder Gegenelektrode(n) in Berührung gebracht wird, durch Anwendung von Wärme und Druck zerfließen kann, um den Leiter längs der Berührungs-Mantellinien freizulegen.

3. Vorrichtung nach Anspruch 2, dadurch gekennzeichnet, daß die nichtleitenden Fäden eines Verbandes durch nichtleitende Fasern gebildet werden, etwa aus Glas, Polyester oder Polyamid, die eine äußere thermoplastische Umhüllung von der Art aufweisen können, daß der Verband einer Heißkalandrierung unterzogen werden kann, die ihm eine bessere Festigkeit verleiht, wobei die nichtleitenden Fäden auch durch Metallfäden oder leitende Fasern gebildet sein können, die mit einer isolierenden Hülle überzogen sind, vorausgesetzt, daß die letztere den höchsten Temperaturen widersteht, die bei der Herstellung oder dem Gebrauch dieser Vorrichtung auftreten.

4. Vorrichtung nach einem der Ansprüche 1 bis 3, bei der die Elektroden (23) und die Gegenelektroden (2, 6) in feinen Linien angeordnet sind, im Hinblick auf die Steuerung der Vorrichtung nach einem Matrix-Multiplexverfahren, dadurch gekennzeichnet, daß das Gegenelektrodenraster (2) durch die leitenden Fäden (2) einer Kette gebildet wird, die durch Schären einer Wechselfolge aus n benachbarten leitenden Fäden und p benachbarten nichtleitenden Fäden (3) gebildet wird, wobei n und p jeweils wenigstens gleich 1 sind, wobei die Gruppen benachbarter Fäden durch Bänder (6) ersetzt sein können, die jeweils durch Walzen eines Fadens mit größerem Querschnitt erhalten werden, wobei diese Kette (2-3) verfestigt sein kann durch Verwendung einer das Basissubstrat bildenden Klebefolie (5) auf der Oberfläche derselben, die der mit dem elektrolytischem Milieu (26, 25) in Berührung kommenden Oberfläche entgegengesetzt ist.

5. Vorrichtung nach Anspruch 4, dadurch gekennzeichnet, daß der Verband der Kettfäden (2-3) durch nichtleitende Schußfäden (4) gehalten wird, die durch eine Art Webvorgang angebracht werden und deren Abstand gleich dem Rastermaß der Pixel längs der Kettfäden (2-3) oder einem ganzzahligen Vielfachen davon ist.

6. Vorrichtung nach Anspruch 4 oder 5, dadurch gekennzeichnet, daß ein Lack und/oder bestimmte Schichten, die das leitende elektrolytische Milieu bilden, auf den einzelnen leitenden Fäden (2, 6) angebracht ist oder sind, bevor sie durch Schären verbunden werden, oder auf Vliesen (11) aus diesen leitenden Fäden (2, 6) angebracht ist oder sind, die beim Schären durch Kämme oder ähnliche Organe (12, 13) geordnet werden, durch Führen dieser Vliese (11) durch ein Bad mit der Umhüllungzusammensetzung und dann durch eine Polymerisations-Trocknungszone (bei 20), bevor diese Vliese (11) sich vereinigen und aneinander angelagert werden.

7. Vorrichtung nach einem der Ansprüche 4 bis 6, bestehend aus einem Farbbildschirm, der nach einem Matrix-Multiplexverfahren gesteuert wird, bei dem die Zellen oder Pixel gemäß einem regelmäßigen Raster verteilt sind, das wenigstens drei Grundfarben aufweist, die regelmäßig längs der "Zeilen" und "Spalten" verteilt sind, dadurch gekennzeichnet, daß die Farbpigmente enthaltenden Schichten auf den Vliesen (11) der leitenden Fäden angebracht sind, die beim Schären auf Kämmen oder entsprechenden Organen (12, 13) geordnet werden, wobei die Anbringung durch Flexodruck oder irgend ein anderes Druckverfahren erfolgt (bei 21), die Fäden desselben Vlieses (11) aufeinanderfolgende querverlaufende Aufdrucke (22) erhalten, deren Breite derjenigen eines Pixels entspricht und die in der geforderten Wechselfolge der Farben gebildet werden, wobei die Aufdrucke auf den verschiedenen Vliesen (11) so versetzt sind, daß sich aus dem endgültigen Vlies (15) die gewünschte regelmäßige Verteilung der gefärbten Pixel ergibt, wenn die verschiedenen Vliese (11) sich vereinigen und aneinander angelagert werden.

8. Vorrichtung nach einem der Ansprüche 1 bis 7, dadurch gekennzeichnet, daß die Mittel zur zusätzlichen Stromzufuhr zum Mittelbereich der Arbeitselektrode(n) (23) oder der Gegenelektrode(n), sofern sie transparent ist (sind) aus einem Gitter (27) bestehen, dessen Schußfäden leitende Fäden (28, 28A) sind und dessen Kettfäden nichtleitende Fäden (29) sind oder umgekehrt, wobei das Gitter (27) an der oder den zugehörigen Elektrode(n) (23) oder der oder den zugehörigen Gegenelektrode(n) angebracht und fixiert ist und der Kontakt vorteilhafterweise längs feiner Streifen erfolgt.

9. Vorrichtung nach Anspruch 8, bei der die leitenden Fäden (28, 28A) des Gitters eine Umhüllung (28a) aus schmelzbarem Kunststoff aufweisen und die nichtleitenden Fäden (29) durch leitende Fäden desselben Typs gebildet werden, jedoch mit einer isolierenden Umhüllung, dadurch gekennzeichnet, daß die schmelzbare Hülle aus einem thermoplastischen Material gewählt ist und daß die Hülle, die dazu dient, die Fäden (29) in Querrichtung nichtleitend zu machen, aus einem wärmebeständigen Material gewählt ist, von der Art eines Emails oder eines bei hoher Temperatur wärmehärtenden Materials.

10. Vorrichtung nach Anspruch 8 oder 9, bei der die Arbeitselektroden (23) und die Gegenelektroden (2, 6) in einem Raster aus feinen Linien angeordnet sind und jeweils "Spalten" und "Zeilen" im Hinblick auf die Steuerung der Vorrichtung nach einem Matrix-Multiplexverfahren bilden, dadurch gekennzeichnet, daß die leitenden Fäden (28, 28A) so angeordnet sind, daß sie mit den leitenden Teilen in Berührung stehen und die nichtleitenden Fäden (29) so angebracht sind, daß sie nichtleitenden Teilen (3) gegenüberliegen, die die "Zeilen" des Rasters der Gegenelektroden (2, 6) trennen, wobei der Abstand zwischen den nichtleitenden Fäden (29) dem Rastermaß der "Zeilen" oder einem ganzzahligen Vielfachen davon entspricht.

11. Vorrichtung nach Anspruch 10, dadurch gekennzeichnet, daß die leitenden Fäden (28, 28A) so angeordnet sind, daß sie mit jedem der leitenden Teile längs ihrer beiden Ränder in Kontakt stehen, wobei zwei benachbarte leitende Fäden (28A), die dazu bestimmt sind, sich an zwei benachbarte leitende Teile anzulegen, durch wenigstens einen anderen, parallelen nichtleitenden Faden (29A) verbunden sind.

12. Anlage zur Herstellung eines Rasters von Gegenelektroden aus feinen Linien und dem zugehörigen Substrat, das aus einem Verband nach einem der Ansprüche 4 bis 7 besteht, dadurch gekennzeichnet, daß sie aus einer Schärvorrichtung (7) besteht, in der die leitenden Fäden (2, 6) und die nichtleitenden Fäden (3) auf Kämmen oder entsprechenden Organen (12, 13) zu Vliesen (11) geordnet werden, dann die Vliese (11) zu einem endgültigen Vlies (15) vereinigt werden, wobei die leitenden (2, 6) und nichtleitenden Fäden (3) mit der gewählten Wechselfolge auf einem mit Kerben versehenen Zylinder (16) aneinander angelagert werden und das endgültige Vlies (15) dann auf die Trommel (18) der Schärvorrichtung (7) aufgewickelt wird, gegebenenfalls gesammelt auf einerm Klebefilm (5), wobei wenigstens eine Umhüllungsstation (20) und/oder wenigstens eine Station (21) zum Bedrucken der leitenden Fäden (2, 6) an der Bewegungsbahn der auf den Kämmen oder entsprechenden Organen (12, 13) geordneten Vliese (11) angeordnet sein kann.

13. Anlage zur Herstellung eines Rasters von transparenten oder im wesentlichen transparenten Elektroden oder Gegenelektroden in der Form einer dünnen Schicht und in feinen Linien, dem ein Gitter zur zusätzlichen Stromzufuhr zugeordnet ist, nach einem der Ansprüche 8 bis 11, und die die Herstellung des endgültigen Verbandes eines Bildschirms oder einer Anzeige ermöglicht, dadurch gekennzeichnet, daß sie aufweist:
- einen Arbeitstisch (30), der von Löchern durchsetzt ist, die entsprechend dem Raster des Gitters (27) angeordnet sind;
- eine unter dem Arbeitstisch (30) und parallel zu diesem angeordnete Platte (32), die Nadeln (31) trägt, deren Querschnitt im wesentlichen den Abmessungen einer Gittermasche entspricht, welche Platte (32) sich Anheben und Absenken kann, um die Nadeln (31) jeweils durch die Löcher des Arbeitstisches (30) vorstehen zu lassen, damit das Gitter (27) darauf positioniert werden kann, und um sie zurückzuziehen, damit auf dem so positionierten Gitter (27) das transparente Substrat angebracht werden kann, auf dem zuvor die Elektroden oder Gegenelektroden angeordnet worden sind;
- Mittel (33), die das genannte transparente Substrat (24) abstützen und in der Lage sind, es auf das Gitter (27) in Position auf dem Arbeitstisch (30) abzusenken und wieder anzuheben, wenn es mit dem Gitter (27) verbunden worden ist;
- an dem Arbeitstisch (30) und/oder den Stützmitteln (33) angebrachte Einstellmittel (34, 35) zur Gewährleistung einer exakten Positionierung der leitenden Fäden (28, 28A) des Gitters (27) längs der leitenden Linien des Rasters der Elektroden oder Gegenelektroden; und
- Mittel zur Ausübung von Wärme und Druck auf das Gitter-Substrat-Gebilde, sofern die leitenden Fäden (28, 28A) eine thermoplastische Hülle haben; wobei der Arbeitstisch (30), wenn das Gebilde einmal Gitterelektroden oder Gegenelektroden erhalten hat, dazu dienen kann, das Raster der Gegenelektroden oder der Elektroden und sein Substrat und die zwischenliegende(n) Elektrolytschicht(en) (25, 26) aufzunehmen, wobei die Stützmittel (33), die das zuvor genannte Gitterelektroden- oder Gegenelektroden-Gebilde tragen, dann zur Endmontage des Bildschirms oder der Anzeige auf den Tisch (30) abgesenkt werden.

## Claims

1. Light modulation device operating according to an electrochromic process, comprising:
- a first substrate (24), transparent or substantially transparent, which has at least one working electrode (23), in a thin layer, transparent or substantially transparent and electronically conductive;
- a second substrate (5, 3, 4) at a distance transversally in relation to the first substrate (24) and having at least one electronically conductive counter-electrode (2, 6), which said second substrate and the associated counter-electrode(s) may be transparent or substantially transparent;
the layout of the electrodes (23) and counter-electrodes (2, 6) on their respective substrates and their relative arrangement being selected to form a light modulation cell or juxtaposition of cells;
- at least one layer (25, 26) of electrolytic material between working electrode(s) (23) and counter-electrode(s) (2, 6), the composition of which makes it possible to ensure electrochromism;
- means of supplying electric current to the ends of the working electrode(s) (23) and of the counter-electrode(s) (2, 6), which may be completed by means of supplying electric current within the working electrode(s) (23) and/or the counter-electrode(s) if the latter is (or are) transparent or substantially transparent, it being possible to provide means of addressing in the case of a juxtaposition of cells in prder to control them selectively ;
- means of protecting the working electrodes (23) and the counter-electrodes (2, 6) and means of protecting the layer(s) of electrolytic material (25, 26),
characterised in that, for the creation of a network of counter-electrodes which is to be structured according to fine lines and/or for the creation of means of supplying additional current to electrodes and/or counter-electrodes in the case where the latter are transparent or substantially transparent, an assembly of conductive wires (2, 6, 28, 28A) and non-conductive wires (3, 4, 29, 29A) is formed, of a fabric, sheet or grid type, the said non-conductive wires (3, 4, 29, 29A) being arranged in relation to the conductive wires (2, 6, 28, 28A) so as to ensure a separation of the latter and/or to contribute to the strength of the said assembly.

2. Device as in claim 1, characterised in that to create the network of counter-electrodes (2, 6), a non-corrodible conductive wire is used, for example, a carbon fiber or a metal or alloy wire not corroded by the electrolytic medium chosen, including when the current passes into the cell,or again a conductive metal wire protected from contact with the electrolytic medium by means of a conductive varnish, formed,for example, by particles of graphite in a polymerisable binder; and, to make up an assembly (27) for supplying additional current within a working electrode or a network of working electrodes (23) or of a counter-electrode or a network of transparent counter-electrodes, a conductive wire of the same type as previously which, if it is made from a corrodible metal, is provided with a sheath of plastic material (28a) which is able to yield when heat and pressure are applied when it is placed in contact with the electrode(s) (23) or counter-electrode(s) to release the conductor along the contact generators.

3. A device as in claim 2, characterised in that the non-conductive wires of an assembly are made up of non-conductive fibers, such as glass, polyester and polyamide, which may have an external thermoplastic covering, so that the assembly may be subjected to a hot calendering operation giving it improved strength, it also being possible for the non-conductive wires to be made up of conductive metal wires or fibers covered with an insulating sheath provided that the latter is resistant to operations involving the highest temperatures used in the construction or use of the said device.

4. A device as in one of claims 1 to 3, in which the electrodes (23) and counter-electrodes (2,6) are constructed according to fine lines for the purpose of controlling the said device by a multiplex matrix method, characterised in that the network of counter-electrodes (2) is formed by the conductive wires (2) of a warp obtained by warping alternately n adjacent conductive wires (2) and p adjacent non-conductive wires (3), n and p each being at least equal to 1, it being possible for adjacent groups of wires to have been replaced by strips (6) each obtained by lamination of a wire of a greater section, it being possible for the said warp (2-3) to be made integral with it by using, on its surface opposite that in contact with the electrolytic medium (26, 25), an adhesive film (5) forming the basic substrate.

5. A device as in claim 4, characterised in that the assembly of warp wires (2-3) is held together by a weft of non-conductive wires (4) which has been put in place by an additional weaving operation and the gap of which is equal to the pixel spacing along the said warp wires (2-3) or a complete multiple of this spacing.

6. A device as in one of claims 4 and 5, characterised in that a varnish and/or some layers forming the conductive electrolytic medium has (or have) been applied to the individual conductive wires (2, 6) before their assembly by warping or has (or have) been fixed to sheets (11) of these conductive wires (2, 6) organised on cards or similar devices (12, 13) during warping, by the said sheets (11) being guided into a bath of the coating preparation, then into a polymerisation/drying area ( at 20), before the said sheets (11) come together to be juxtaposed.

7. A device as in one of claims 4 to 6, consisting of a colour screen controlled by a multiplex matrix method, in which the cells or pixels are distributed according to a regular network comprising at least three basic colours distributed regularly -along the "lines" or "columns", characterised in that the layers containing colouring pigments have been applied to sheets (11) of the conductive wires organised on cards or similar devices (12, 13) during warping, by printing by flexography or by any other printing process (at 21), the wires of the same sheet (11) being given successive transversal imprints (22), the width of which corresponds to that of a pixel and which are formed with a required alternation of the colours, the imprints made on the different sheets (11) being staggered so that the desired regular distribution of the coloured pixels appears on the final sheet (15) obtained when the different sheets (11) come together to be juxtaposed.

8. A device as in one of claims 1 to 7, characterised in that the means for supplying additional current within the working electrode(s) (23) or the counter-electrode(s) if the latter is (or are) transparent consist of a grid (27), the weft wires of which are conductive wires (28, 28A) and the warp wires are non-conductive wires (29), or vice versa, the said grid (27) being applied and fixed on to the associated electrode(s) (23) or to the associated counter-electrode(s), the contact being effected advantageously along fine strips.

9. A device as in claim 8, in which the conductive wires (28, 28A) of the grid are provided with a sheath (28a) of plastic material able to yield and the non-conductive wires (29) are made up of conductive wires of the same type, but covered with an insulating sheath, characterised in that the yieldable sheath is selected in a thermoplastic material, and the sheath used to make the wires (29) non-conductive transversally is selected in a material resistant to heat, of the enamel type or a material thermosetting at high temperature.

10. A device as in one of claims 8 and 9, in which the working electrodes (23) and the counter-electrodes (2, 6) are arranged in a network of fine lines, forming respectively "columns" and "lines" for the purpose of controlling the said device by a multiplex matrix method, characterised in that the conductive wires (28, 28A) are arranged so as to be in contact with the conductive parts and that the non-conductive wires (29) are arranged so as to be situated opposite the non-conductive parts (3), separating the "lines" of the network of counter-electrodes (2, 6), the distance between the non-conductive wires (29) corresponding to the spacing of the "lines" or a complete multiple of the spacing.

11. A device as in claim 10, characterised in that the conductive wires (28, 28A) are arranged so as to be in contact with each of the conductive parts, along their two edges, two neighbouring conductive wires (28A) intended to be applied to two adjacent conductive parts being linked by means of at least one other parallel non-conductive wire (29A)

12. Equipment for the manufacture of a network of counter-electrodes in fine lines and its associated substrate consisting of an assembly as defined in one of claims 4 to 7, characterised in that it consists of a warping device (7) in which the conductive wires (2, 6) and the non-conductive wires (3) are organised in sheets (11) on cards or similar devices (12, 13), then the sheets (11) are joined together into one final sheet (15), the conductive wires (2, 6) and non-conductive wires (3) being juxtaposed alternately as selected on a cylinder (16) provided with notches, the final sheet (15) being then wound on to the drum (18) of the warping device (7), if need be collected on to an adhesive film (5), it being possible for at least one coating station (20) and/or at least one printing station (21) for the conductive wires (2, 6) to be arranged in the path of the sheets (11) organised on cards or similar devices (12, 13).

13. Equipment for the manufacture of a network of transparent or substantially transparent electrodes or counter- electrodes, in a thin layer and in fine lines, to which is connected a grid for supplying additional current , as described in one of claims 8 to 11, and making it possible to achieve the final assembly of a screen or display unit, characterised in that it comprises:
- a work table (30) perforated with holes arranged according to the network of the grid (27);
- a plate (32) positioned beneath the work table (30), parallel to the latter, bearing needles (31) with a section corresponding approximately to the dimensions of a mesh of the grid (27), the said plate (32) being able to be raised and lowered respectively to make the needles (31) project through the holes of the work table (30), for the purpose of positioning the grid (27) on the latter, and to withdraw them for the purpose of applying on to the grid (27) positioned in this way, the transparent substrate on which the electrodes or counter-electrodes have previously been deposited ;
- means (33) of support for the said substrate (24) and capable of lowering it on to the grid (27) in place on the work table (30) and of raising it once it has been made integral with the grid (27);
- means of control (34, 35), fitted to the work table (30) and/or the said means of support (33) in order to ensure an exact positioning of the conductive wires (28, 28A) of the grid (27) along the conductive lines of the network of electrodes or counter-electrodes; and
- means for applying heat and pressure to the grid/substrate unit, in the case where the conductive wires (28, 28A) are provided with a thermoplastic sheath;
it being possible for the said work table (30) to be used once the grid/electrodes or counter-electrodes unit is obtained, to take the network of counter-electrodes or electrodes and its substrate, and the intermediate electrolytic layer(s) (25, 26), the means of support (33) bearing the above-mentioned grid/electrodes or counter electrodes unit then being lowered again on to the table (30) for the purpose of making up the final assembly of the screen or display unit.
